Europäisches Patentamt

European Patent Office

Office européen des brevets

(19)

(11) Veröffentlichungsnummer: **0 184 986**
**B1**

(12) **EUROPÄISCHE PATENTSCHRIFT**

(45) Veröffentlichungstag der Patentschrift:
**29.06.88**

(21) Anmeldenummer: **85810530.7**

(22) Anmeldetag: **12.11.85**

(51) Int. Cl.⁴: **H 02 G 9/10**

(54) **Kabelschacht.**

(30) Priorität: **28.11.84 CH 5681/84**

(43) Veröffentlichungstag der Anmeldung:
**18.06.86 Patentblatt 86/25**

(45) Bekanntmachung des Hinweises auf die Patenterteilung:
**29.06.88 Patentblatt 88/26**

(84) Benannte Vertragsstaaten:
**AT BE CH DE FR GB IT LI LU NL SE**

(56) Entgegenhaltungen:
**CH-A-640 372**
**DE-A-2 525 285**
**DE-C-446 058**
**DE-C-490 584**

(73) Patentinhaber: **Martin Mannhart Hoch- und Tiefbau, CH- 8890 Flums (CH)**

(72) Erfinder: **Mannhart, Martin, Banau, CH- 8890 Flums (CH)**

(74) Vertreter: **Justitz- Wormser, Daisy P., Dipl.- Chem., PATENTANWALTS- BUREAU ISLER AG Postfach 6940 Walchestrasse 23, CH- 8023 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

EP 0 184 986 B1

**Beschreibung**

Ein Kabelschacht gemäss Oberbegriff des Anspruchs 1 ist aus CH-A-640 372 bekannt.

Dieser bekannte Kabelschacht hat eine quaderförmige Wanne, deren Seitenwände nach oben offene, gegen unten keilförmig zulaufende Öffnungen aufweisen. Die Ränder der Öffnungen haben Nutführungen zum Einschieben von Mündungstrichtern von oben her. Die Wanne ist durch Platten abgedeckt. Dieser Kabelschacht eignet sich gut zur serienmässigen Vorfabrikation. Nachteilig ist allerdings, dass zum nachträglichen Anschluss eines weiteren Kabels die ganze Wanne freigelegt werden muss und die Deckplatten abgehoben werden müssen, um einen zusätzlichen Mündungstrichter einsetzen zu können. Dies ist sehr arbeitsaufwendig und verursacht, wenn der Kabelschacht in einer Strasse eingebaut ist, längere Verkehrsstörungen.

Der vorliegenden Erfindung liegt die Aufgabe zugrunde, diese Nachteile zu beseitigen.

Diese Aufgabe wird durch die kennzeichnenden Merkmale des Anspruchs 1 gelöst.

Bei der erfindungsgemässen Ausbildung des Kabelschachtes braucht für den nachträglichen Anschluss eines Kabels bloss eine der noch freien Öffnungen in der Seitenwand der Wanne freigelegt und ein diese Öffnung von aussen verschliessender Blinddeckel entfernt zu werden. Hierauf kann ein zusätzlicher Mündungstrichter durch die Einstiegsöffnung in den Kabelschacht eingebracht und von innen in die freigelegte Öffnung eingesetzt werden. Die Kosten für einen zusätzlichen Anschluss, der Zeitaufwand und Dauer und Umfang der Verkehrsstörungen werden damit erheblich reduziert.

Einstiegs-Kabelschächte sind zwar an sich aus der DE-C-490 584 und der DE-C-446 058 bekannt. Bei diesen Kabelschächten ist allerdings der nachträgliche Einbau eines zusätzlichen Mündungstrichters noch erheblich aufwendiger als bei der CH-A-640 372.

Nachfolgend wird ein Ausführungsbeispiel der Erfindung anhand der Zeichnung erläutert.

Darin zeigt:

Fig. 1 einen Längsschnitt durch einen Kabelschacht entlang der Linie I - I in Fig. 2,

Fig. 2 die Draufsicht auf die Wanne,

Fig. 3 den Querschnitt längs der Linie III - III in Fig. 1,

Fig. 4 die Draufsicht auf einen Mündungstrichter, und

Fig. 5 bis Fig. 7 eine Variante des Mündungstrichters im Grundriss, in Vorderansicht und im Längsschnitt.

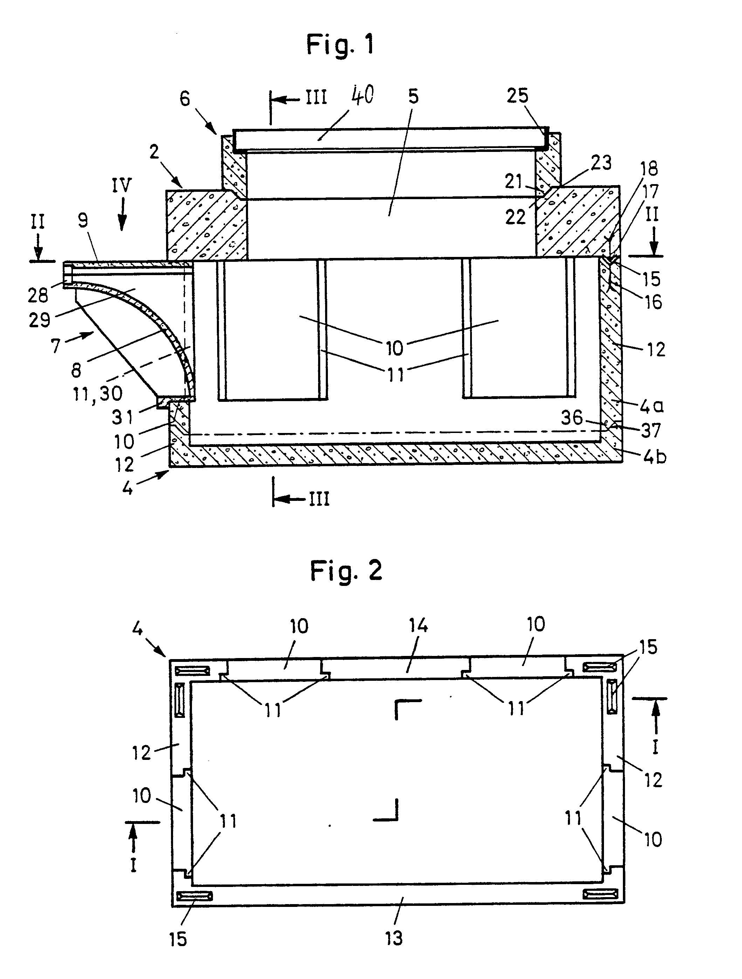

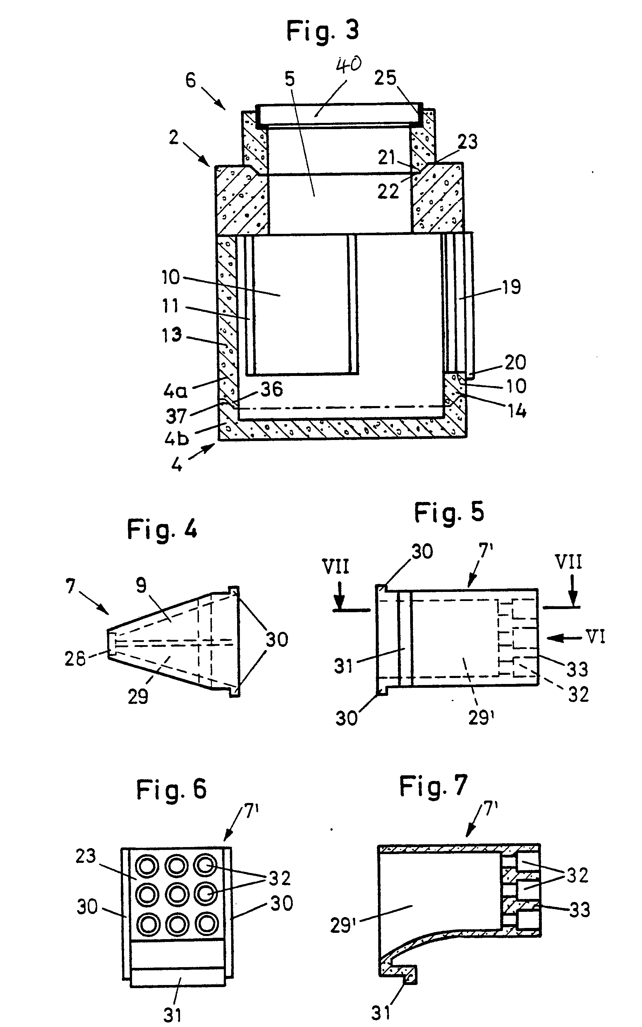

Der Einstiegs-Kabelschacht wird aus Beton hergestellt und umfasst eine quaderförmige Wanne 4, eine Deckplatte 2, einen Aufsatzrahmen 6 sowie Mündungstrichter 7. Die Wanne 4 hat einen rechteckigen Grundriss. An den beiden Querwänden 2 ist benachbart zur einen, durchgehenden Längswand 13 je eine rechteckige Öffnung 10 vorgesehen, die sich bis zum oberen Rand der Wanne 4 erstreckt. Die andere Längswand 14 weist benachbart zu den Querwänden 2 zwei gleichgeformte Öffnungen 10 auf. Die Öffnungen 10 haben innen seitlich eine stufenförmige Erweiterung 11. Die Wanne 4 kann auch zweistückig ausgebildet werden, wobei auf einen durchgehenden wannenförmigen Unterteil 4b ein mit den Öffnungen 10 versehener rahmenförmiger Oberteil 4a aufgesetzt ist. Durch einen längs des Umfangs verlaufenden Vorsprung 36 des Oberteils 4a und eine entsprechende Ausnehmung 37 im Unterteil 4b sind die beiden Teile zueinander zentriert. Diese Variante ist in den Fig. 1 und 3 durch strichpunktierte Linien angedeutet.

Mindestens in den beiden Öffnungen 10 der Querwände 12 sind Mündungstrichter 7 eingesetzt. Der Mündungstrichter 7 gemäss Fig. 1 und 4 ist für den Anschluss von Zores-Kabelkanalprofilen vorgesehen. Er besteht aus einem halbschalenförmigen Unterteil 8 und einem halbschalenförmigen Oberteil 9, die zusammen eine trichterförmige Öffnung 29 umschliessen. An der Mündung weist die Öffnung 29 eine Erweiterung 28 zur Aufnahme von Zores-Kabelkanalprofilen auf. Zweckmässig ist diese Erweiterung für die grösste gängige Zores-Grösse ausgelegt. Für den Anschluss kleinerer Zores-Profile wird in die Ausnehmung 28 ein Reduzierstück eingesetzt. Der Unterteil 8 weist längs seines unteren Randes eine Nase 31 zur Anlage an der Aussenfläche der Wanne 4 auf. Seitlich sind sowohl am Unterteil 8, als auch am Oberteil 9 Flansche 30 vorgesehen, die in die Erweiterungen 11 der Öffnungen 10 passen.

Durch diese Ausbildung des Mündungstrichters 7 ist es möglich, ihn bei aufgesetzter Deckplatte 2 von innen her durch die Öffnungen 10 einzusetzen. Der nachträgliche Einsatz in eine der Öffnungen 10 der Längswand 14 ist deshalb ohne grossen Aufwand bei späteren zusätzlichen Kanalabgängen möglich. Durch Anlage der Nase 31 an der Aussenfläche und des Flansches 30 in der Erweiterung 11 wird der Mündungstrichter sicher gehalten. Durch die zweiteilige Ausbildung des Mündungstrichters und die bis an den Rand der Wanne 4 reichenden Öffnungen ist es möglich, den Kabelschacht in bestehende Kabelanlagen einzusetzen, ohne die Kabel durchtrennen zu müssen.

Statt des Mündungstrichters 7 für Zores-Profile kann auch ein Rohrblock-Mündungstrichter 7' gemäss Fig. 5 bis 7 in die Öffnungen 10 eingesetzt werden. Dieser Mündungstrichter ist einstückig ausgebildet und weist wiederum eine trichterförmige Öffnung 29', unten die Nase 31 und seitlich die Flansche 30 auf. Am Mündungsende ist eine Endplatte 33 mit mehreren abgestuften Bohrungen 32 zum Einschieben von Kunststoffrohren vorgesehen. Um auch bei dieser Ausführungsform ein Einsetzen des Mündungstrichters 7' bei aufgesetzter Deckplatte 2 zu ermöglichen, kann die Höhe des Mündungstrichters 7' geringer sein als die Höhe der Öffnungen 10. Der bei eingesetztem Mündungstrichter oben entstehende Spalt kann zum Beispiel durch einen Keilstab verschlossen werden.

Die Deckplatte 2 ist zum Befahren durch Schwerlastverkehr dimensioniert. Sie weist einen rechteckigen Einstiegsöffnung 5 auf und ist auf der Wanne 4 formschlüssig zentriert, damit Seitenkräfte sicher von der Deckplatte 2 auf die Wanne übertragen werden können. Dazu sind längs des oberen Randes der Wanne 4 mehrere konkave Winkelprofile 15 mit angeschweissten Verankerungseisen 16 in die Wanne 4 eingegossen. In die Deckplatte 2 sind entsprechende konvexe Winkelprofile 17 mit Verankerungseisen 18 eingegossen.

Auf die Deckplatte 2 ist ein rechteckiger Aufsatzrahmen 6 aufgesetzt. Ein umlaufender Vorsprung 21 zentriert den Rahmen 6 durch Eingriff in eine entsprechende Ausnehmung 22 der Deckplatte 2 und sichert ihn gegen seitliche Verschiebung. Am oberen Rand ist in den Aufsatzrahmen 6 ein eiserner Verstärkungsrahmen 25 eingegossen, in welchen zweite Deckelemente 40 zum Verschliessen der Einstiegsöffnung 5 eingelegt werden. Der Verstärkungsrahmen 25 überragt den Aufsatzrahmen um die Dicke des vorgesehenen Strassen-Endbelages.

Zur Anpassung an die Quer- und Längsneigung der Strassenoberfläche können Aufsatzrahmen 6 mit entsprechend nicht parallelen Grund- und Deckflächen vorgesehen werden. Die Feinjustierung kann durch Einschlagen von Keilen in die Trennfläche 23 zwischen Aufsatzrahmen 6 und Deckplatte 2 erfolgen, wobei der entstehende Spalt mit Mörtel gefüllt wird.

In die nicht benötigten Öffnungen 10 in der Längswand 14 sind Blinddeckel 19 von aussen her eingesetzt. Sie liegen mit einer Schulter 20 an der Aussenfläche der Wanne 4 an. Sie sind nach Bedarf wasserdicht abschliessbar.

**Patentansprüche**

1. Kabelschacht mit einem rechteckigen Grundriss, umfassend eine quaderförmige Wanne (4), ein auf die Wanne (4) aufgesetztes Deckelelement (2, 6) und in Öffnungen (10) in den Wänden (12, 14) der Wanne (4) eingesetzte Mündungstrichter (7), dadurch gekennzeichnet, dass das Deckelelement (2, 6) eine Einstiegsöffnung (5) aufweist, und dass die Mündungstrichter (7) seitlich je einen Flansch (30) zur Anlage an der Innenfläche der Wanne (4) aufweisen und längs ihrer Unterseite mit einer Nase (31) an der Aussenfläche der Wanne (4) anliegen.

2. Kabelschacht nach Anspruch 1, dadurch gekennzeichnet, dass sich die Öffnungen (10) bis zum oberen Rand der Wanne (4) erstrecken.

3. Kabelschacht nach Anspruch 1 oder 2, dadurch gekennzeichnet, dass in jeder Querwand (12) der Wanne (4) benachbart zur einen, durchgehenden Längswand (13) eine Öffnung (10) und in der anderen Längswand (14) benachbart zu den beiden Querwänden (12) je eine Öffnung (10) vorgesehen ist.

4. Kabelschacht nach einem der Ansprüche 1 bis 3, dadurch gekennzeichnet, dass der Mündungstrichter (7) aus zwei Halbschalen (8, 9) besteht.

5. Kabelschacht nach einem der Ansprüche 1 bis 4, dadurch gekennzeichnet, dass das Deckelelement formschlüssig auf die Wanne aufgesetzt ist.

6. Kabelschacht nach Anspruch 5, dadurch gekennzeichnet, dass in den oberen Rand der Wanne (4) und in die Unterseite des Deckelelementes (2, 6) mehrere ineinandergreifende Winkelprofile (15, 17) eingegossen sind.

7. Kabelschacht nach einem der Ansprüche 1 bis 6, dadurch gekennzeichnet, dass das Deckelelement (2, 6) aus einer Platte (2) und einem darauf formschlüssig aufgesetzten Aufsatzrahmen (6) besteht.

8. Kabelschacht nach einem der Ansprüche 1 bis 7, dadurch gekennzeichnet, dass das Deckelelement (2, 6) längs des oberen Endes des Einstiegsschachtes (5) einen abgestuften metallenen Verstärkungsrahmen (25) aufweist, der das Deckelelement (2, 6) überragt, und in welchen zweite Deckelelemente (40) zum Verschliessen des Einstiegsschachts (5) einlegbar sind.

9. Kabelschacht nach einem der Ansprüche 1 bis 8, dadurch gekennzeichnet, dass der Einstiegsschacht rechteckig ist.

**Claims**

1. A cable manhole having a rectangular plan view, comprising a square casing (4), a cover element (2, 6) placed on to the casing (4), and ducts (7) inserted into openings (10) in the walls (12, 14) of the casing (4), characterised in that the cover element (2, 6) has an entry opening (5), and that the ducts (7) have a flange (30) on each side for abutment against the inner surface of the casing (4) and a lip (31) along their undersides for abutment against the outer surface of the casing (4).

2. A cable manhole as claimed in claim 1, characterised in that the openings (10) extend to the top edge of the casing (4).

3. A cable manhole as claimed in claim 1 or 2, characterised in that each transverse wall (12) of the casing (4) is provided with an opening (10) adjacent to a continuous longitudinal wall (13), and the other longitudinal wall (14) is provided with two openings (10) each adjacent to a respective one of the two transverse walls (12).

4. A cable manhole as claimed in any one of claims 1 to 3, characterised in that the duct (7) comprises two half-shells (8, 9).

5. A cable manhole as claimed in any one of claims 1 to 4, characterised in that the cover element is placed onto the casing in an interlocking manner.

6. A cable manhole as claimed in claim 5, characterised in that a plurality of inter-engaging angle sections (15, 17) is integrally cast in the top edge of the casing (4) and in the underside of the cover element (2, 6).

7. A cable manhole as claimed in any one of claims 1 to 6, characterised in that the cover element (2, 6) comprises a plate (2) and a mounting frame (6) placed thereon in an interlocking manner.

8. A cable manhole as claimed in any one of claims 1 to 7, characterised in that the cover element (2, 6) has along the top end of the entry manhole (5) a stepped metal reinforcing frame (25) which projects above the cover element (2, 6) and into which second cover elements (40) are insertable for closing the entry manhole (5).

9. A cable manhole as claimed in any one of claims 1 to 8, characterised in that the entry manhole is rectangular.

**Revendications**

1. Chambre à câbles rectangulaire en projection horizontale comprenant une cuvette parallélépipédique (4), un élément de recouvrement (2, 6) posé sur la cuvette (4) et des entonnoirs d'entrée (7) introduits dans des orifices (10) formés dans les parois (12, 14) de la cuvette (4), caractérisée en ce que l'élément de recouvrement (2, 6) comporte un orifice d'accès (5), et en ce que les entonnoirs d'entrée (7) comportent latéralement chacun une bride (30) devant entrer en contact avec la surface intérieure de la cuvette (4) et sont en contact, par leur face inférieure, avec un ergot (31) placé sur la surface extérieure de la cuvette (4).

2. Chambre à câbles selon la revendication 1, caractérisée en ce que les orifices (10) s'étendent jusqu'au bord supérieur de la cuvette (4).

3. Chambre à câbles selon la revendication 1 ou 2, caractérisée en ce qu'il est prévu dans chaque paroi transversale (12) de la cuvette (4), au voisinage d'une paroi longitudinale (13) ininterrompue, un orifice (10), et dans l'autre paroi longitudinale (14), au voisinage de chacune des deux parois transversales (12), un orifice (10) respectif.

4. Chambre à câbles selon l'une des revendications 1 à 3, caractérisée en ce que l'entonnoir d'entrée (7) est constitué par deux moitiés (8, 9).

5. Chambre à câbles selon l'une des revendications 1 à 4, caractérisée en ce que l'élément de recouvrement est posé avec concordance de forme sur la cuvette.

6. Chambre à câbles selon la revendication 5, caractérisée en ce que plusieurs cornières (15, 17) qui s'emboîtent, sont scellées dans le bord supérieur de la cuvette (4) et dans la face inférieure de l'élément de recouvrement (2, 6).

7. Chambre à câbles selon l'une des revendications 1 à 6, caractérisée en ce que l'élément de recouvrement (2, 6) comprend une plaque (2) et un châssis superposé (6) posé sur elle avec concordance de forme.

8. Chambre à câbles selon l'une des revendications 1 à 7, caractérisée en ce que l'élément de recouvrement (2, 6) comporte, le long de l'extrémité supérieure de l'orifice d'entrée (5), un châssis de renforcement en métal (25) étagé, qui dépasse de l'élément de recouvrement (2, 6) et dans lequel peuvent être insérés de seconds éléments de recouvrement (40) pour obturer l'orifice d'accès (5).

9. Chambre à câbles selon l'une des revendications 1 à 8, caractérisée en ce que l'orifice est rectangulaire.

# Fig. 1

# Fig. 2

## Fig. 3

## Fig. 4

## Fig. 5

## Fig. 6

## Fig. 7